# EUROPEAN PATENT SPECIFICATION

(11) **EP 4 322 604 B1**
(45) Date of publication and mention of the grant of the patent: **09.12.2026**
(21) Application number: 22784065.9
(22) Date of filing: 06.04.2022
(51) Int. Cl.: H04W 28/02, H04W 72/543

(54) **DATA PROCESSING METHOD AND APPARATUS, STORAGE MEDIUM AND PROGRAM PRODUCT**
DATENVERARBEITUNGSVERFAHREN UND -VORRICHTUNG, SPEICHERMEDIUM UND PROGRAMMPRODUKT
PROCÉDÉ ET APPAREIL DE TRAITEMENT DE DONNÉES, SUPPORT DE STOCKAGE ET PRODUIT PROGRAMME

(30) Priority: 07.04.2021 CN 202110373435
(43) Date of publication of application: 14.02.2024
(73) Proprietor: Datang Mobile Communications Equipment Co., Ltd., Beijing 100085 (CN)
(72) Inventor: ZHOU, Ye, Beijing 100085 (CN); LIU, Aijuan, Beijing 100085 (CN)
(74) Representative: Studio Torta S.p.A.
(86) International application number: PCT/CN2022/085365
(87) International publication number: WO 2022/213999

(56) References cited:
- EP-A1- 3 836 612
- WO-A1-2020/119546
- CN-A- 110 312 282
- CN-A- 110 312 282
- LG ELECTRONICS INC. ET AL.: ""Bearer Context Modification Required procedure"", 3GPP TSG-RAN WG3 #100 R3-182844, 11 May 2018 (2018-05-11), XP051527024
- SAMSUNG, HUAWEI, LGU+, CHINA TELECOM, INTEL CORPORATION: "Correction of intra-system HO in CP-UP separation scenario", 3GPP DRAFT; R3-211260, 3RD GENERATION PARTNERSHIP PROJECT (3GPP), 5 February 2021 (2021-02-05), XP051978539

## Description

### TECHNICAL FIELD

The present application relates to the field of communication technologies and, in particular, to a data processing method and apparatus, a storage medium and a program product.

### BACKGROUND

The service data flow in the 5th-Generation (5G) system is organized with the minimum granularity of quality of service flow (QoS flow) to provide different qualities of service for different services.

A QoS flow is identified by a QoS flow identifier (QFI). A QoS flow is transmitted through a data radio bearer (DRB) at the access layer. The actual service quality level of a certain QoS flow depends largely on the service quality parameter(s) of the DRB to which this QoS flow maps, so in most cases, a network maps different QoS flows to different DRBs to ensure the pertinence of transmission scheduling.

CN110312282A discloses a data transmission method and device. Data transmission based on QoS flow can be realized under separated CU-CP and CU-UP architectures. According to the embodiment of the invention, the method comprises the steps: in a CU-CP/CU-UP separation scene, when the CU-UP receives QoS flow data, sending the QoS flow identification ID and the PDU session ID of the QoS flow data to the CU-CP; wherein the PDU session corresponding to the PDU session ID comprises the QoS flow data, so that the CPU-CP can determine the mapping mode from the QoS flow data to the radio bearer, thereby satisfying the transmission performance parameters of the QoS flow and improving the user experience.

### SUMMARY

The present application provides a data processing method and apparatus, a storage medium and a program product, for ensuring that data on a data flow can be transmitted in the manner of meeting a QoS requirement. The present invention is defined in the independent claims.

The present application provides a data processing method and apparatus, a storage medium and a program product. In the method, a first network element in a radio access network transmits a first interface message to a second network element in a radio access network after receiving a downlink data packet, so as to request the second network element to determine a bearer to which data flow is mapped, thereby ensuring that data on the data flow can be transmitted in the manner of meeting a QoS requirement.

It should be understood that, the content described in the summary section above is not intended to limit key or important features of the embodiments of the present application, nor is it intended to limit the scope of the present application. Other features of the present application will be readily understood by the following description.

### BRIEF DESCRIPTION OF DRAWINGS

FIG. 1 is a schematic diagram of a 5G system.
FIG. 2 is a schematic flowchart I of a data processing method provided by an embodiment of the present application.
FIG. 3 is a schematic flowchart II of a data processing method provided by an embodiment of the present application.
FIG. 4 is a schematic flowchart III of a data processing method provided by an embodiment of the present application.
FIG. 5 is a schematic diagram I of a data processing apparatus provided by an embodiment of the present application.
FIG. 6 is a schematic diagram II of a data processing apparatus provided by an embodiment of the present application.
FIG. 7 is a schematic diagram of a network device provided by an embodiment of the present application.

### DESCRIPTION OF EMBODIMENTS

The term "and/or" in the present application describes an association relationship between associated objects, and represents that there may exist three relationships. For example, A and/or B may represent three cases: A exists separately, A and B exist simultaneously, and B exists separately. The character "/" generally indicates an "or" relationship between the associated objects before and after the character. The term "a plurality of" in the embodiments of the present application refers to two or more, and other quantifiers are similar thereto.

The following clearly and comprehensively describes technical solutions in the embodiments of the present application with reference to the accompanying drawings in the embodiments of the present application. Apparently, the described embodiments are merely a part rather than all of the embodiments of the present application. Other embodiments obtained by a person of ordinary skill in the art based on the embodiments of the present application without paying creative efforts shall fall within the scope of protection of the present application.

The embodiments of the present application provide a data processing method and apparatus, so that when a user plane node in a radio access network receives downlink user data, it can notify a control plane node to trigger a bearer configuration process for the data flow, thereby ensuring that the downlink user data can be normally transmitted to a user equipment. Among them, the method and the apparatus are based on the same application, the principles of solving problems are similar, for the embodiments of the apparatus and the method, reference can be made to each other for the same parts, which will not be described here again.

The technical solutions provided by the embodiments of the present application may be applicable to various systems, and in particular, to a 5G system. For example, an applicable system may be a global system of mobile communication (GSM), a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. The various systems all include a terminal device and a network device, and further include a core network part, such as an evolved packet system (EPS), a 5G system (5GS), etc.

The terminal device involved in the embodiments of the present application may be a device that provides voice and/or data connectivity to users, a handheld device with wireless connection function, or other processing devices connected to a wireless modem. In different systems, the name of a terminal device may be different. For example, in a 5G system, a terminal device can be called a user equipment (UE). A wireless terminal device can communicate with one or more core networks (CN) via a radio access network (RAN). A wireless terminal device can be a mobile terminal device, such as a mobile phone (or "cellular" phone) and a computer with a mobile terminal device, such as a portable, pocket-sized, hand-held, computer-built or vehicle-mounted mobile device, which exchanges languages and/or data with the radio access network. For example, a personal communication service (PCS) phone, a cordless phone, a session initiated protocol (SIP) phone, a wireless local loop (WLL) station, a personal digital assistant (PDA) , etc. A wireless terminal device can also be called a system, a subscriber unit, a subscriber station, a mobile station, a mobile, a remote station, an access point, a remote terminal, an access terminal, a user terminal, a user agent or a user device, which is not limited in the embodiments.

The base station involved in the embodiments of the present application may include a plurality of cells providing services for terminals. According to different specific applications, a base station can also be called an access point, or it can be a device in an access network that communicates with wireless terminal device through one or more sectors through the air interface, etc. For example, the base station involved in the embodiments of the present application may be an evolutional Node B (eNB or e-NodeB) in a long-term evolution (LTE) system, a 5G base station (gNB) in a 5G network architecture (next generation system), or a Home evolved Node B (HeNB), a relay node (relay node), a home base station (femto), a pico base station (pico), etc., which is not limited in the embodiments. In some network structures, a base station may include a centralized unit (CU) node and a distributed unit (DU) node, where the centralized unit and the distributed unit may also be geographically separated.

Multi Input Multi Output (MIMO) transmission can be performed between the base station and the terminal device by using one or more antennas respectively, and the MIMO transmission can be single user MIMO (SU-MIMO) or multiple user MIMO (MU-MIMO). According to the shape and number of antenna combinations, MIMO transmission can be 2D-MIMO, 3D-MIMO, FD-MIMO or massive-MIMO, and it can also be diversity transmission, precoding transmission or beamforming transmission.

The following introduces the transmission of service data in the 5G system.

Service data in the 5G system is divided into protocol data unit sessions (PDU Session) according to parameters including a data source and a slice attribute, and data in each PDU Session is further divided into several QoS flows. Within the PDU Session, a QoS flow is uniquely identified by a QoS flow identifier (QFI), where the main purpose of dividing different QoS flows is to provide different qualities of service for different service data.

Due to the characteristics of the transmission channel, the link that has the greatest impact on the quality of service usually lies in the air interface, so different qualities of service often show different air interface processing methods, such as different scheduling priorities. In specific processing, a radio access network (NG-RAN) in the 5G system maps QoS flows to DRBs, and adopts different air interface processing methods according to the granularity of DRB, i.e., the same strategy will be adopted for packets belonging to the same DRB in their air interface transmission, no matter which QoS flow the packet belongs to. For each UE, a DRB is uniquely identified by a DRB ID. In the 5G system, multiple QoS flows belonging to the same PDU session are allowed to be mapped to the same DRB, but this means that these QoS flows have to be transmitted using the same air interface processing method. The mapping relationship between QoS flows and DRBs is informed to UE through radio resource control (RRC) signaling.

In order to make more effective and targeted use of air interface resources, the NG-RAN often chooses to conduct one-to-one mapping of QoS flows to DRBs. However, due to the limited underlying resources, in order to avoid the DRB ID to occupy too many bits, the maximum number of DRBs that can be established for each UE is defined as 32. Compared with the fact that at most 256 PDU sessions can be established for each UE in the non-access layer and each PDU session can contain at most 64 QoS flows, the number of DRBs is very small. Therefore, the problem of insufficient number of DRB IDs would occur if the NG-RAN chooses to conduct one-to-one mapping of QoS flows to DRBs.

In view of this, the industry proposes that for those QoS flows with relatively infrequent data transmission and no data at present, the NG-RAN can temporarily not map them to any DRBs, or only map them to the default DRB(s), and specify DRBs for them when there is data to be transmitted in these QoS flows, and then inform the user equipment through RRC signaling and transmit the data, where there is only one default DRB for each PDU session at most, which is used as the default DRB of the PDU session. It can be understood that the default DRB can be used only as a default mapping for data flows, which cannot guarantee the QoS requirements of all data flows, and other DRBs except the default DRB are called non-default DRBs.

When instructing the NG-RAN to establish QoS flows, the core network can mark some QoS flows as "more prone to have data to be transmitted", and mark other QoS flows as "relatively rare" QoS flows. According to this information, the NG-RAN can selectively map simply a part of QoS flows to DRBs, and temporarily do not map the remaining QoS flows, or simply map them to the default DRB. When a downlink data packet needs to be transmitted on a QoS flow that is temporarily not mapped or mapped to the default DRB, the core network will not transmit any control plane signaling specifically for the data packet, but will directly transmit the data packet to the NG-RAN through the user plane channel for the PDU session with the QFI of the QoS flow attached. Under the condition that a central module-control plane (CU-CP) and a central module-user plane (CU-UP) of the NG-RAN are not separated, the NG-RAN can choose to establish a DRB for the QoS flow for transmission or map the QoS flow to an existing DRB for transmission after receiving the data packet.

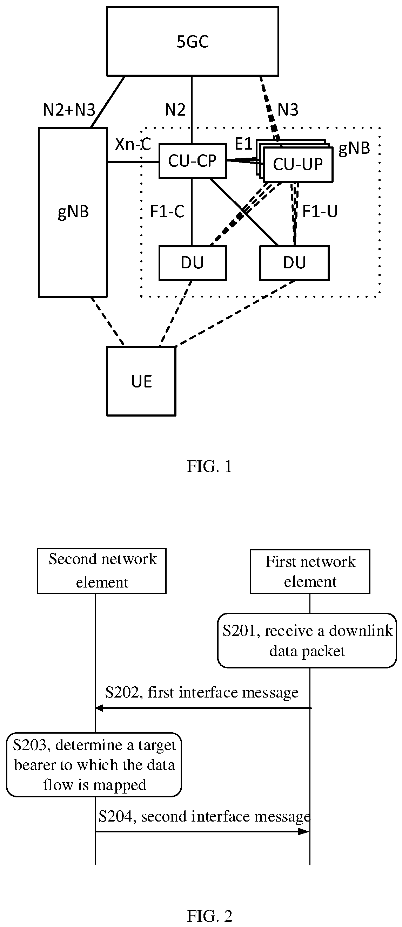

However, in view of the separation of the CU-CP and the CU-UP in the NG-RAN, the NG-RAN cannot realize the above transmission process after receiving the downlink data packet. It will be explained in combination with the 5G NR network architecture shown in FIG. 1.

In the NG-RAN, a logical NG-RAN node can be further divided into a CU-CP, one or more CU-UPs, and one or more distributed units (DUs). This structure is called CU-CP/UP split (CU-CP/UP split).

As shown in FIG. 1, in the case that the NG-RAN node is an NG-RAN node that adopts the new radio (NR) technology, i.e., gNB, a gNB-CU-CP and a gNB-DU are connected via an F1-C interface, while the gNB-CU-CP and a gNB-CU-UP are connected via an E1 interface. The control plane connection N2 between the gNB and a core network (5G Core, 5GC) ends at the gNB-CU-CP, while the air interface connection between the gNB and the UE ends at the gNB-DU.

When there is user plane data to be transmitted, an N3 transmission channel will be established between the gNB-CU-UP and the 5GC, and an F1-U transmission channel will be established between the gNB-DU and the gNB-CU-UP. For air interface control plane functions that involve the organization of services, such as air interface control plane functions that involve how QoS flows and DRBs are mapped, since they involve both of the gNB-DU and the gNB-CU-UP, in order to facilitate unified control and management, this part of air interface functions interact with the UE through an RRC module in the gNB-CU-CP, and the exchanged signaling is called RRC signaling. In particular, downlink RRC signaling is generated by the gNB-CU-CP, and after being encapsulated into a layer 2 packet, it is transmitted to the gNB-DU through the F1-C, and then forwarded to the UE through the air interface.

Similarly, in the case that the NG-RAN node is a node adopting the evolved universal terrestrial radio access (E-UTRA) technology, i.e., in the case that the NG-RAN node is an ng-eNB, an eNB-CU-CP and an eNB-DU are connected via a W1-C interface, while the eNB-CU-CP and an eNB-CU-UP are connected via an E1 interface. The control plane connection N2 between the ng-eNB and the 5GC ends at the eNB-CU-CP, while the air interface connection between the ng-eNB and the UE ends at the eNB-DU.

When there is user plane data to be transmitted, an N3 transmission channel will be established between the eNB-CU-UP and the 5GC, and a W1-U transmission channel will be established between the eNB-DU and the eNB-CU-UP. The other functions are similar to the functions of the above gNB.

Through the introduction of the above architecture, it can be seen that for a certain QoS flow, when the CU-CP determines not to map it to any DRB temporarily or only map it to the default DRB, if downlink data belonging to this QoS flow arrives at the CU-UP from the core network, due to CU-CP/UP split, the CU-CP cannot know that the downlink data of this QoS flow arrives at the CU-UP. Therefore, subsequent remapping and other processes cannot be triggered, so that the downlink data cannot be transmitted through the air interface at all, or a QoS requirement cannot be guaranteed when it is transmitted through the air interface, and the subsequent data packets on the QoS flow cannot be transmitted through the air interface in the manner of meeting a QoS requirement for the same reason.

In order to solve the above problem, the embodiments of the present application propose that when the user plane central node of the radio access network receives a downlink data packet, and the downlink data packet belongs to a data flow that is not mapped to any radio bearer, or belongs to a data flow that is only mapped to a default radio bearer, the user plane central node needs to re-acquire a radio bearer to which the data flow is mapped from the control plane central node of the radio access network, so as to ensure that the downlink data packet and subsequent data packets on the data flow can be transmitted between the radio access network and UE through the air interface in the manner of meeting a QoS requirement.

The data processing method of the present application will be described in detail below with reference to specific embodiments. The following specific embodiments may be implemented independently or combined with each other, and the same or similar concept or process may not be repeated in some embodiments.

FIG. 2 is a schematic flowchart of a data processing method provided by an embodiment of the present application. The method is applied to a first network element and a second network element in a radio access network. For example, the first network element is a user plane central node and the second network element is a control plane central node. As shown in FIG. 2, the method includes:
S201: a first network element receives a downlink data packet.

The downlink data packet includes downlink user data and an identifier of a data flow to which the downlink user data belongs.

The downlink data packet received by the first network element is transmitted by a core network, and the first network element can determine, according to the identifier of the data flow in the downlink data packet, whether the data flow to which the downlink user data in the downlink data packet belongs has been mapped to an appropriate bearer. For the data flow that has been mapped to an appropriate bearer, the first network element can normally transmit the downlink data packet based on the bearer, while for the data flow that has not been mapped to an appropriate bearer, the first network element needs to perform subsequent steps to trigger the bearer mapping of the data flow. The identifier of the data flow can be a QFI or other identifier information that can characterize the data flow.

In an implementation, "the data flow is mapped to an appropriate bearer" may mean that the data flow is mapped to any bearer, and the corresponding "the data flow is not mapped to an appropriate bearer" means that the data flow is not mapped to any bearer.

In another implementation, "the data flow is mapped to an appropriate bearer" may mean that the data flow is mapped to a non-default bearer, and the corresponding "the data flow is not mapped to an appropriate bearer" means that the data flow is not mapped to any non-default bearer. The default bearer is a default bearer for a PDU session, and it can be used simply as a default mapping bearer for a data flow, which cannot guarantee a QoS requirement of the data flow.

In addition, it should be noted that the mapping relationship between the data flow and the bearer can be without distinguishing between uplink and downlink data, i.e., the data flow can be mapped directly, or it can be with distinguishing between uplink and downlink data, i.e., the uplink data and downlink data in the data flow can be mapped separately. The above-mentioned data flow that is not mapped to any appropriate bearer may mean that the data flow is not mapped to any appropriate bearer in the case that no distinguishment is made between uplink and downlink data, or that downlink data and/or uplink data of the data flow is not mapped to any appropriate bearer in the case that distinguishment is made between uplink and downlink data, which is not limited in the embodiments of the present application.

S202: the first network element transmits a first interface message to the second network element in the radio access network.

The first interface message includes the identifier of the data flow, and the first interface message is used for determining a target bearer to which the data flow is mapped.

Since the mapping relationship between the data flow and the bearer is determined by the second network element, in the embodiments of the present application, when the first network element determines according to the identifier of the data flow that the data flow to which the received downlink data packet belongs is not mapped to any appropriate bearer, it transmits a first interface message to the second network element, and carries the identifier of the data flow in the first interface message, so that the second network element can know that the first network element has received a data packet of the data flow that is not mapped to any appropriate bearer, thus triggering the second network element to map the data flow to a bearer.

S203: the second network element determines a target bearer to which the data flow is mapped according to the first interface message.

After receiving the first interface message, the second network element maps the data flow to a target bearer according to the identifier of the data flow in the first interface message, and the target bearer can be a newly created bearer or an existing bearer in a PDU session to which the data flow belongs. Optionally, in the scenario where the data flow is mapped to the default bearer, the target bearer is a further bearer except the default bearer.

S204: the second network element transmits a second interface message to the first network element.

The second interface message includes an identifier of the target bearer, so that the first network element transmits downlink user data to the user equipment according to the target bearer.

Illustratively, the second interface message may include the identifier of the data flow and the identifier of the target bearer, so that after receiving the second interface message, the first network element can determine the target bearer corresponding to the data flow based on the identifier of the target bearer indicated in the second interface message, and transmit the downlink user data to the user equipment based on the target bearer.

Illustratively, the first network element may transmit the downlink user data to the user equipment through a third network element in the radio access network based on the target bearer. The third network element can be a distributed node of the radio access network, and the third network element can transmit the downlink user data to the user equipment through the target bearer.

In the data processing method provided by the embodiments of the present application, after receiving the downlink data packet, the first network element can determine whether the data flow to which the downlink data packet belongs is mapped to an appropriate bearer according to the identifier of the data flow therein, and for the data flow that is not mapped to an appropriate bearer, the first network element transmits an interface message to the second network element, to trigger the second network element to re-map the data flow to the target bearer, so as to ensure that the downlink data packet and subsequent data packets on the data flow can be transmitted between the radio access network and the user equipment through the air interface in the manner of meeting a QoS requirement.

On the basis of the above embodiments, in view of the two situations that the target bearer is a new bearer and the target bearer is a bearer that already exists in the PDU session (an existing bearer), the subsequent processing procedure of each node in the radio access network will be slightly different after the second network element transmits the second interface message to the first network element.

When the target bearer is a new bearer, after the second network element determines to map the data flow to the target bearer, the first network element, the third network element and the user equipment all need to determine corresponding configuration information of the target bearer. Therefore, in addition to transmitting a second interface message to the first network element to instruct the first network element to determine the configuration information of the target bearer, the second network element can transmit a third interface message to the third network element, where the third interface message is used for instructing the third network element and the user equipment to determine the configuration information of the target bearer, and for instructing the third network element to allocate a downlink address of the target bearer. The configuration of the target bearer determined by the first network element and the third network element both include a mapping relationship between the target bearer and the data flow, so that the first network element transmits downlink user data to the user equipment based on the mapping relationship. It can be understood that the configuration information of the target bearer includes not only the corresponding relationship between the target bearer and the data flow, but also other configuration information required by the target bearer to transmit data.

Besides determining the configuration information of the target bearer according to the second interface message, the first network element can also receive the downlink address of the target bearer transmitted by the third network element through the second network element, and then transmit downlink user data to the third network element based on the downlink address of the target bearer, so that the third network element transmits the downlink user data to the user equipment through the target bearer. Optionally, the first network element can also transmit an uplink address of the target bearer to the third network element, where the uplink address is used for instructing the third network element to transmit the uplink user data to the first network element through the uplink address.

When the target bearer is an existing bearer in the PDU session, the first network element, the third network element and the user equipment already have the corresponding configuration information of the target bearer (i.e., the existing bearer), so the second network element simply needs to indicate the mapping relationship between the data flow and the existing bearer to the first network element and the third network element. Therefore, after the second network element determines, according to the first interface message, the existing bearer as the target bearer from bearers of the PDU session to which the data flow belongs, it transmits a second interface message to the first network element, so that the first network element updates the configuration information of the existing bearer according to the second interface message, where the updated configuration information of the existing bearer includes the mapping relationship between the existing bearer and the data flow. For example, if there is no further mapped data flow in the existing bearer, the mapping relationship between the existing bearer and the data flow is added in the configuration of the existing bearer, or if there is a further mapped data flow in the existing bearer, the mapping relationship between the existing bearer and data flows can be modified in the configuration of the existing bearer. In addition, the second network element transmits a fourth interface message to the third network element, and the fourth interface message is used for indicating the mapping relationship between the data flow and the existing bearer to the third network element, so that the third network element updates the configuration information of the existing bearer according to the fourth interface message.

The above two situations will be described in more details with specific embodiments.

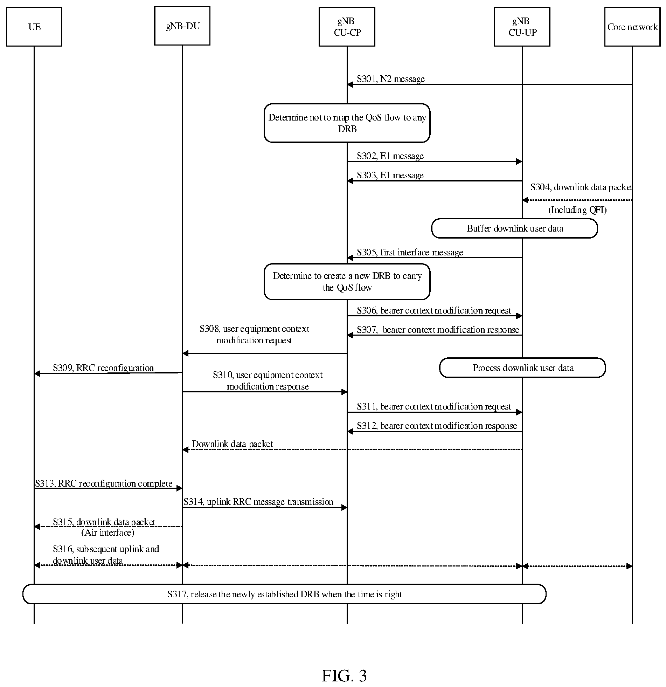

FIG. 3 is a schematic diagram of interaction among the core network, the radio access network and the user equipment when the target bearer is a new bearer. As shown in FIG. 3, the gNB-CU-UP is the first network element, the gNB-CU-CP is the second network element, and the gNB-DU is the third network element.

S301: the core network transmits an N2 interface message to the gNB-CU-CP.

The N2 interface message is used for instructing the gNB-CU-CP to establish a PDU session for the UE, where the PDU session includes a QoS flow, for the transmission bit rate does not need to be guaranteed, and QoS parameters of the PDU session do not include an indication that "this QoS flow is more likely to have data transmission than other QoS flows", so this QoS flow is regarded as a QoS flow with infrequent data transmission. The flow identifier of the QoS flow, namely QFI, is assumed to be 1.

S302: the gNB-CU-CP transmits an E1 interface message to the gNB-CU-UP.

Considering that the number of DRB IDs is limited and the QoS flow is a QoS flow with infrequent data transmission, the gNB-CU-CP determines not to map the QoS flow to any DRB temporarily. At this time, the gNB-CU-CP transmits an E1 interface message to the gNB-CU-UP, which is used for requesting the gNB-CU-UP to establish a corresponding context for the PDU session, including assigning an N3 channel downlink transmission address for the PDU session. Optionally, the E1 interface message also includes an indication for requesting the gNB-CU-UP to monitor the user plane activity.

S303: the gNB-CU-UP feeds back an E1 interface message to the gNB-CU-CP.

The gNB-CU-UP establishes the context for the PDU session, and feeds back an E1 interface message to the gNB-CU-CP, which includes the N3 channel downlink transmission address allocated by the gNB-CU-UP for the PDU session.

S304: the core network transmits a downlink data packet to the gNB-CU-UP.

At a certain moment, the core network finds that there is downlink data belonging to the above QoS flow in the PDU session that needs to be transmitted to the UE. Therefore, the core network transmits an N3 downlink data packet to the gNB-CU-UP through the established N3 transmission channel, the data packet contains downlink user data that needs to be transmitted, and a QFI with a value of 1 which is used for indicating the QoS flow to which the downlink user data belongs.

S305: the gNB-CU-UP transmits a first interface message to the gNB-CU-CP.

The gNB-CU-UP determines that the corresponding QoS flow is not mapped to any DRB according to the QFI, so it cannot be transmitted to the UE through the air interface. Therefore, the gNB-CU-UP buffers the downlink packet and transmits a first interface message to the gNB-CU-CP, the first interface message is an E1 interface message. The first interface message includes the QFI of the QoS flow to indicate that the gNB-CU-UP has received the data packet transmitted by the core network, and the QoS flow to which the data packet belongs is not mapped to any DRB.

S306: the gNB-CU-CP transmits a bearer context modification request message to the gNB-CU-UP.

After receiving the first interface message, the gNB-CU-CP determines to create a new DRB to carry the QoS flow. Therefore, the gNB-CU-CP transmits a bearer context modification request message to the gNB-CU-UP, which is an E1 interface message. Optionally, the bearer context modification request message is the foregoing second interface message, which contains the identifier of the target bearer, i.e., the ID of the DRB, and the DRB contains the QFI with the value of 1 to indicate that the QoS flow is mapped to the DRB. Optionally, the bearer context modification request message also contains other configuration information of the DRB.

S307: the gNB-CU-UP transmits a bearer context modification response message to the gNB-CU-CP.

The gNB-CU-UP establishes the configuration of the DRB, and transmits a bearer context modification response message to the gNB-CU-CP, which is an E1 interface message. Optionally, the gNB-CU-UP allocates an uplink F1-U address to the DRB when establishing the configuration of the DRB, and the bearer context modification response message transmitted by the gNB-CU-CP includes the uplink F1-U address. At the same time, the gNB-CU-UP starts to process the packet according to the DRB configuration provided by the gNB-CU-CP until the packet is encapsulated into a layer 2 packet that can be transmitted through the F1-U channel.

S308: the gNB-CU-CP transmits a user equipment context modification request message to the gNB-DU.

The UE context modification request message is transmitted by the gNB-CU-CP to the gNB-DU through the F1-C channel. The user equipment context modification request message is used for requesting the gNB-DU to establish underlying configuration of the DRB and requesting the gNB-DU to allocate a downlink F1-U address. Optionally, in the case that the bearer context modification response message transmitted by the gNB-CU-CP includes the uplink F1-U address, the user equipment context modification request message is also used for informing the gNB-DU of the uplink F1-U address of the DRB. In addition, the user equipment context modification request message also includes an encapsulated RRC reconfiguration message, which is used for requesting the UE to establish the configuration of the DRB, so that the UE can receive the data packet belonging to the QoS flow through the DRB. The user equipment context modification request message can be the third interface message in the foregoing embodiments.

S309: the gNB-DU transmits an RRC reconfiguration message to the UE.

After the gNB-DU confirms that the underlying configuration of the DRB can be established, it further encapsulates the encapsulated the RRC reconfiguration message into a form that can be transmitted through the air interface, and then transmits the same to the UE.

S310: the gNB-DU feeds back a user equipment context modification response message to the gNB-CU-CP.

The gNB-DU establishes the underlying configuration of the DRB, allocates the downlink F1-U address of the DRB, and then feeds back a user equipment context modification response message to the gNB-CU-CP through the F1-C channel, where the user equipment context modification response message includes the downlink F1-U address of the DRB.

S311: the gNB-CU-CP transmits a bearer context modification request message to the gNB-CU-UP.

The bearer context modification request message contains the downlink F1-U address of the DRB. The bearer context modification request message is an E1 interface message.

S312: the gNB-CU-UP transmits a bearer context modification response message to the gNB-CU-CP.

The bearer context modification response message is used for indicating that the gNB-CU-UP has updated its configuration, and at the same time, the gNB-CU-UP transmits the above layer 2 packet to the gNB-DU through the F1-U channel. The bearer context modification response message is an E1 interface message.

S313: the UE feeds back an RRC reconfiguration complete message to the gNB-DU.

After receiving the RRC reconfiguration message transmitted by the gNB-DU in S309, the UE establishes the configuration of the DRB, and feeds back an RRC reconfiguration complete message through the air interface.

S314: the gNB-DU feeds back an RRC reconfiguration complete message to the gNB-CU-CP.

The gNB-DU decapsulates the RRC reconfiguration complete message transmitted through the air interface into an encapsulated RRC reconfiguration complete message that can be transmitted over the F1-C interface, and then transmits it to the gNB-CU-CP through an uplink RRC message transmission message.

S315: the gNB-DU transmits the downlink data packet to the UE.

After both S312 and S313 are completed, the gNB-DU performs underlying processing on the layer 2 packet received in S312, and then transmits the layer 2 packet to the UE through the air interface. The UE uses the configuration of the DRB established in S313 to decode the transmitted downlink user data from this air interface data packet.

S316: subsequent uplink and downlink user data.

After the above downlink data packet, the core network or the UE may transmit uplink and downlink data packets belonging to this QoS flow. On the basis of the mapping and configuration of the DRB in the above steps, the gNB-CU-UP, the gNB-DU and the UE transmit the subsequent uplink and downlink user data through the DRB established in the above steps.

S317: release the DRB.

If there is no data on the DRB for a long time, the gNB-CU-UP will transmit a bearer context inactive notification message to the gNB-CU-CP. When the time is right, the gNB-CU-CP can trigger the gNB-CU-UP, the gNB-DU and the UE to release the established DRB. The specific duration of the above-mentioned long time and the timing of the release can be set in advance.

It should be noted that in FIG. 3, an example is taken for description where the NG-RAN node is the gNB. When the NG-RAN node adopts ng-eNB, it only needs to replace gNB-CU-CP with eNB-CU-CP, gNB-CU-UP with eNB-CU-UP, gNB-DU with eNB-DU, F1 interface with W1 interface in the above embodiments with other processes unchanged, so details will not be described here again.

In addition, in S302 of FIG. 3, an example is taken for description where the gNB-CU-CP determines not to map the QoS flow to any DRB temporarily. It can be understood that when the gNB-CU-CP determines to map the QoS flow to the default DRB temporarily, and gNB-CU-CP receives the downlink packet of the QoS flow in the subsequent steps, the process of triggering the gNB-CU-CP through the first interface message to re-map the bearer is similar to the above.

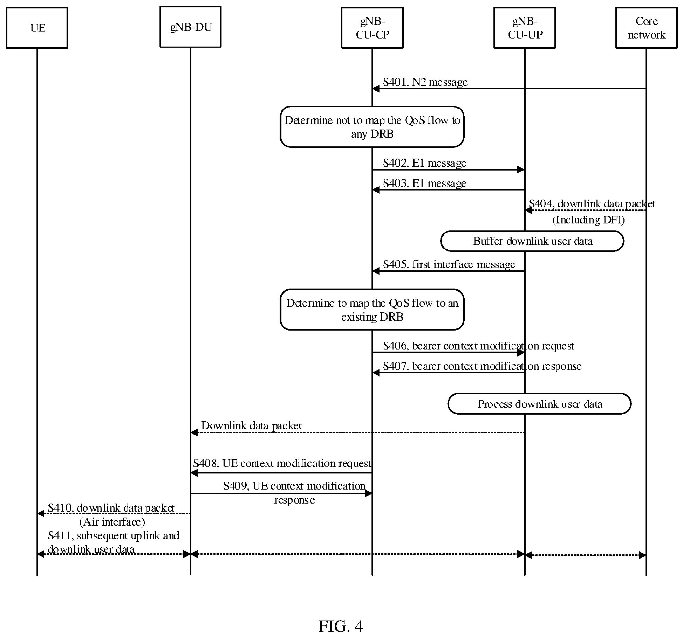

FIG. 4 is a schematic diagram of interaction among the core network, the radio access network and the UE when the target bearer is an existing bearer. As shown in FIG. 4, the gNB-CU-UP is the first network element, the gNB-CU-CP is the second network element, and the gNB-DU is the third network element.

S401: the core network transmits an N2 interface message to the gNB-CU-CP.

The N2 interface message is used for instructing the gNB-CU-CP to establish a PDU session for the UE, where the PDU session includes a QoS flow, for which the transmission bit rate does not need to be guaranteed, and its QoS parameters do not include the indication that "this QoS flow is more likely to have data transmission than other QoS flows", so this QoS flow is regarded as a QoS flow with infrequent data transmission. The flow identifier of the QoS flow, namely QFI, is assumed to be 1.

S402: the gNB-CU-CP transmits an E1 interface message to the gNB-CU-UP.

Considering that the number of DRB IDs is limited and the QoS flow is a QoS flow with infrequent data transmission, the gNB-CU-CP determines not to map the QoS flow to any DRB temporarily. At this time, the gNB-CU-CP transmits an E1 interface message to the gNB-CU-UP, which is used for requesting the gNB-CU-UP to establish a corresponding context for the PDU session, including assigning an N3 channel downlink transmission address for the PDU session. In addition, the E1 interface message also contains an indication for requesting the gNB-CU-UP to establish at least one DRB for the PDU session, where the DRB may not contain any QoS flows and simply operate as the default DRB for the PDU session. The process of establishing at least one DRB for the PDU session here is the same as those in related technologies, so it will not be described here again.

S403: the gNB-CU-UP feeds back an E1 interface message to the gNB-CU-CP.

The gNB-CU-UP establishes the context for the PDU session, and feeds back an E1 interface message to the gNB-CU-CP, which includes the N3 channel downlink transmission address allocated by the gNB-CU-UP for the PDU session.

S404: the core network transmits a downlink data packet to the gNB-CU-UP.

At a certain moment, the core network finds that there is downlink data belonging to the above QoS flow in the PDU session that needs to be transmitted to the UE. Therefore, the core network transmits an N3 downlink data packet to the gNB-CU-UP through the established N3 transmission channel, the data packet contains downlink user data that needs to be transmitted, and a QFI with a value of 1 which is used for indicating the QoS flow to which the downlink user data belongs.

S405: the gNB-CU-UP transmits a first interface message to the gNB-CU-CP.

The gNB-CU-UP determines that the corresponding QoS flow is not mapped to any DRB according to the QFI, so it cannot be transmitted to the UE through the air interface. Therefore, it buffers the downlink packet and transmits a first interface message to the gNB-CU-CP, which is an E1 interface message. The first interface message includes the QFI of the QoS flow to indicate that the gNB-CU-UP has received the data packet transmitted by the core network, and the QoS flow to which the data packet belongs is not mapped to any DRB.

S406: the gNB-CU-CP transmits a bearer context modification request message to the gNB-CU-UP.

After receiving the first interface message, the gNB-CU-CP determines to use an existing DRB belonging to the PDU session to carry the QoS flow. Therefore, the gNB-CU-CP transmits a bearer context modification request message to the gNB- CU-UP, which is an E1 interface message. Optionally, the bearer context modification request message is the foregoing second interface message, which contains the identifier of the target bearer, i.e., the ID of the DRB, and the DRB contains the QFI with the value of 1 to indicate that the QoS flow is mapped to the DRB.

S407: the gNB-CU-UP transmits a bearer context modification response message to the gNB-CU-CP.

The gNB-CU-UP updates configuration of the DRB according to the bearer context modification request message transmitted by the gNB-CU-CP, for example, adds a mapping relationship between the DRB and the QoS flow in the configuration of the DRB, and transmits a bearer context modification response message to the gNB-CU-CP to indicate that the configuration has been updated, which is an E1 interface message. At the same time, the gNB-CU-UP starts to process the packet according to the DRB configuration provided by the gNB-CU-CP until the packet is encapsulated into a layer 2 packet that can be transmitted through the F1-U channel and transmit it to the gNB-DU through the F1-U channel.

S408: the gNB-CU-CP transmits a user equipment context modification request message to the gNB-DU.

The user equipment context modification request message is transmitted by the gNB-CU-CP to the gNB-DU through the F1-C channel. The user equipment context modification request message is used for notifying the gNB-DU that the QoS flow has been mapped to the DRB. The user equipment context modification request message can be the fourth interface message in the foregoing embodiments.

S409: the gNB-DU feeds back a user equipment context modification response message to the gNB-CU-CP.

The user equipment context modification response message indicates that the foregoing user equipment context modification request message has been received.

S410: the gNB-DU transmits the downlink data packet to the UE.

The gNB-DU performs underlying processing on the layer 2 packet that it has received in S407, and then transmits the layer 2 packet to the UE through the air interface. The UE uses the configuration of the previously established DRB to decode the transmitted downlink user data from this air interface data packet.

S411: subsequent uplink and downlink user data.

After the above downlink data packet, the core network or the UE may transmit uplink and downlink data packets belonging to the QoS flow. On the basis of the mapping of the DRB in the above steps, the gNB-CU-UP, the gNB-DU and the UE transmit the subsequent uplink and downlink user data through the DRB established in the above steps.

It should be noted that in FIG. 4, an example is taken for description where the NG-RAN node is the gNB. When the NG-RAN node adopts ng-eNB, it needs only to replace gNB-CU-CP with eNB-CU-CP, gNB-CU-UP with eNB-CU-UP, gNB-DU with eNB-DU, F1 interface with W1 interface in the above embodiments with other processes unchanged, so they will not be described here again.

In addition, in S402 of FIG. 4, an example is taken for description where the the gNB-CU-CP determines not to map the QoS flow to any DRB temporarily. It can be understood that when the gNB-CU-CP determines to map the QoS flow to the default DRB temporarily and the gNB-CU-CP receives the downlink packet of the QoS flow in the subsequent steps, the process of triggering the gNB-CU-CP through the first interface message to re-map the bearer is similar to the above.

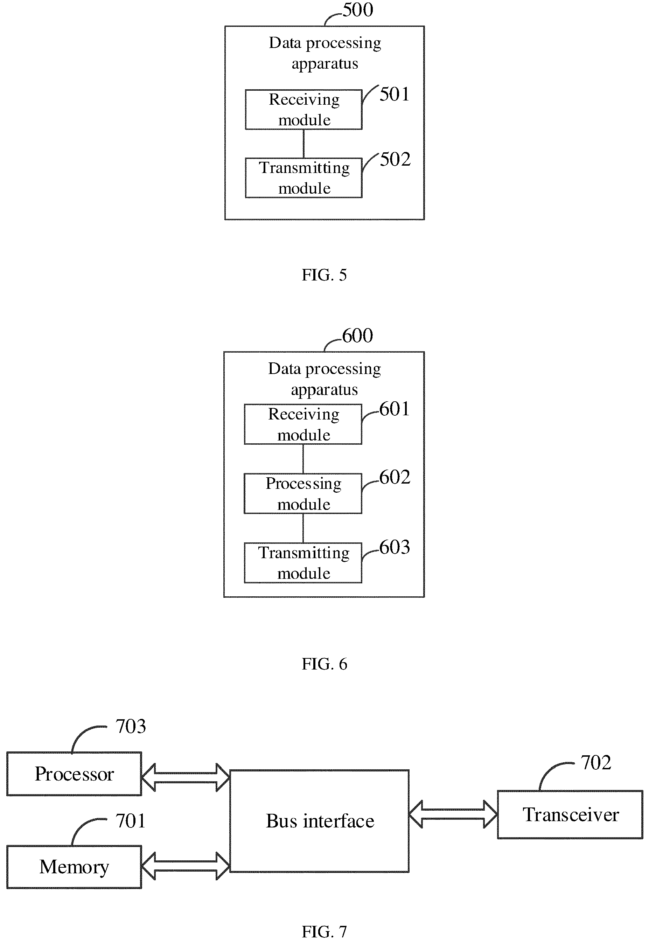

FIG. 5 is a schematic diagram I of a data processing apparatus provided by an embodiment of the present application. The data processing apparatus 500 is applied to a first network element in a radio access network, including:
a receiving module 501, configured to receive a downlink data packet, where the downlink data packet includes downlink user data and an identifier of a data flow to which the downlink user data belongs; and
a transmitting module 502, configured to transmit a first interface message to a second network element in the radio access network, where the first interface message includes the identifier of the data flow, and the first interface message is used for determining a target bearer to which the data flow is mapped.

In an implementation, the transmitting module 502 is configured to:
judge whether the data flow is mapped to a bearer according to the identifier of the data flow;
transmit the first interface message to the second network element in the radio access network when the data flow is not mapped to the bearer or the data flow is mapped to a default bearer.

In an implementation, when the data flow is mapped to the default bearer, the target bearer is a further bearer except the default bearer.

In an implementation, the receiving module 501 is further configured to:
receive a second interface message transmitted by the second network element, where the second interface message includes an identifier of a target bearer;
the transmitting module 502 is further configured to:
   transmit the downlink user data to a user equipment according to the identifier of the target bearer included in the second interface message.

In an implementation, the transmitting module 502 is configured to:
determine configuration information of the target bearer according to the identifier of the target bearer included in the second interface message, where the configuration information of the target bearer includes a mapping relationship between the target bearer and the data flow;
transmit the downlink user data to the user equipment based on the mapping relationship.

In an implementation, the transmitting module 502 is further configured to:
acquire a downlink address of the target bearer from a third network element in the radio access network based on the mapping relationship;
transmit the downlink user data to the third network element based on the downlink address of the target bearer, to enable the third network element to transmit the downlink user data to the user equipment through the target bearer.

In an implementation, the transmitting module 502 is further configured to:
transmit an uplink address of the target bearer to the third network element, where the uplink address is used for instructing the third network element to transmit uplink user data to the first network element through the uplink address.

In an implementation, the target bearer is an existing bearer in a protocol data unit session to which the data flow belongs;
the transmitting module 502 is configured to:
update configuration information of the existing bearer according to an identifier of the existing bearer included in the second interface message, where the updated configuration information of the existing bearer includes a mapping relationship between the existing bearer and the data flow.

It should be noted that, the foregoing apparatus provided by the present application can implement all method steps implemented by the first network element in the foregoing method embodiments, and can achieve the same technical effects. The parts and beneficial effects of this embodiment that are the same as those of the method embodiments are not described here again.

FIG. 6 is a schematic diagram II of a data processing apparatus provided by an embodiment of the present application. The data processing apparatus 600 is applied to a second network element in a radio access network, including:
a receiving module 601, configured to receive a first interface message transmitted by a first network element in the radio access network, where the first interface message includes an identifier of a data flow of the downlink user data;
a processing module 602, configured to determine a target bearer to which the data flow is mapped according to the first interface message; and
a transmitting module 603, configured to transmit a second interface message to the first network element, where the second interface message includes an identifier of the target bearer, so that the first network element transmits the downlink user data to a user equipment according to the target bearer.

In an implementation, the transmitting module 603 is further configured to:
transmit a third interface message to a third network element in the radio access network, where the third interface message is used for instructing the third network element and the user equipment to determine configuration information of the target bearer and for instructing the third network element to allocate a downlink address of the target bearer;
the receiving module 601 is further configured to:
   receive the downlink address transmitted by the third network element and transmit the downlink address to the first network element, to enable the first network element to transmit the downlink user data to the third network element according to the downlink address.

In an implementation, the receiving module 601 is further configured to:
receive an uplink address of the target bearer transmitted by the first network element;
the transmitting module 603 is further configured to:
   transmit the uplink address to the third network element, to enable the third network element to transmit uplink user data to the first network element through the uplink address.

In an implementation, the target bearer is an existing bearer in a protocol data unit session to which the data flow belongs.

In an implementation, the transmitting module 603 is further configured to:
transmit a fourth interface message to a third network element in the radio access network, where the fourth interface message is used for indicating a mapping relationship between the data flow and the target bearer.

It should be noted that, the foregoing apparatus provided by the present application can implement all method steps implemented by the second network element in the foregoing method embodiments, and can achieve the same technical effects. The parts and beneficial effects of this embodiment that are the same as those of the method embodiments are not described here again.

It should be noted that division of the modules in the embodiments of the present application is schematic, which is merely logical function division and may be other division in actual implementations. In addition, various functional modules in the embodiments of the present application may be integrated into one processing module, or each of the modules may exist separately, or two or more modules are integrated into one module. The integrated module may be implemented in a form of hardware, and may also be implemented in a form of a software functional module.

If the integrated module is implemented in the form of the software functional module and sold or used as an independent product, the integrated module may be stored in a processor-readable storage medium. Based on such understanding, a technical solution of the present application essentially, or the part contributing to the prior art, or all or a part of the technical solution may be implemented in a form of a software product. The computer software product is stored in a storage medium and includes several instructions for causing a computer device (which may be a personal computer, a server, or a network device, etc.) or a processor to execute all or part of the steps of the methods described in the embodiments of the present application. The foregoing storage medium includes: any medium that can store program codes, such as a USB flash disk, a mobile hard disk, a read-only memory (ROM), a random access memory (RAM), a magnetic disk, or an optical disk, etc.

FIG. 7 is a schematic diagram of a network device provided by embodiment of the present application. As shown in FIG. 7, a base station 700 includes a memory 701, a transceiver 702 and a processor 703, where:
the memory 701 is configured to store a computer program;
the transceiver 702 is configured to receive and transmit data under control of the processor 703; and
the processor 703 is configured to read the computer program in the memory 701 and perform the following operations:
   receiving a downlink data packet, where the downlink data packet includes downlink user data and an identifier of a data flow to which the downlink user data belongs;
   transmitting a first interface message to a second network element in a radio access network, where the first interface message includes the identifier of the data flow, and the first interface message is used for determining a target bearer to which the data flow is mapped.

In an implementation, the processor 703 is configured to:
judge whether the data flow is mapped to a bearer according to the identifier of the data flow;
transmit the first interface message to the second network element in the radio access network when the data flow is not mapped to the bearer or the data flow is mapped to a default bearer.

In an implementation, when the data flow is mapped to the default bearer, the target bearer is a further bearer except the default bearer.

In an implementation, the processor 703 is configured to:
receive a second interface message transmitted by the second network element, where the second interface message includes an identifier of a target bearer;
transmit the downlink user data to a user equipment according to the identifier of the target bearer included in the second interface message.

In an implementation, the processor 703 is configured to:
determine configuration information of the target bearer according to the identifier of the target bearer included in the second interface message, where the configuration information of the target bearer includes a mapping relationship between the target bearer and the data flow;
transmit the downlink user data to the user equipment based on the mapping relationship.

In an implementation, the processor 703 is configured to:
acquire a downlink address of the target bearer from a third network element in the radio access network based on the mapping relationship; and
transmit the downlink user data to the third network element based on the downlink address of the target bearer, to enable the third network element to transmit the downlink user data to the user equipment through the target bearer.

In an implementation, the processor 703 is configured to:
transmit an uplink address of the target bearer to the third network element, where the uplink address is used for instructing the third network element to transmit uplink user data to the first network element through the uplink address.

In an implementation, the target bearer is an existing bearer in a protocol data unit session to which the data flow belongs;
the processor 703 is configured to:
update configuration information of the existing bearer according to an identifier of the existing bearer included in the second interface message, where the updated configuration information of the existing bearer includes a mapping relationship between the existing bearer and the data flow.

Alternatively, the processor 703 is configured to read the computer program in the memory 701 and perform the following operations:
receiving a first interface message transmitted by a first network element in the radio access network, where the first interface message includes an identifier of a data flow of the downlink user data;
determining a target bearer to which the data flow is mapped according to the first interface message;
transmitting a second interface message to the first network element, where the second interface message includes an identifier of the target bearer, so that the first network element transmits the downlink user data to a user equipment according to the target bearer.

In an implementation, the processor 703 is configured to:
transmit a third interface message to a third network element in the radio access network, where the third interface message is used for instructing the third network element and the user equipment to determine the configuration information of the target bearer and for instructing the third network element to allocate the downlink address of the target bearer;
receive the downlink address transmitted by the third network element and transmit the downlink address to the first network element, to enable the first network element to transmit the downlink user data to the third network element according to the downlink address.

In an implementation, the processor 703 is configured to:
receive an uplink address of the target bearer transmitted by the first network element;
transmit the uplink address to the third network element, to enable the third network element to transmit uplink user data to the first network element through the uplink address.

In an implementation, the target bearer is an existing bearer in a protocol data unit session to which the data flow belongs.

In an implementation, the processor 703 is configured to:
transmit a fourth interface message to a third network element in the radio access network, where the fourth interface message is used for indicating a mapping relationship between the data flow and the target bearer.

In FIG. 7, a bus interface may include any number of interconnecting buses and bridges, specifically linked together by various circuits of one or more processors represented by the processor 703 and a memory represented by the memory 701. The bus interface may also link various other circuits such as peripherals, voltage regulators, power management circuits and the like, which are well known in the art, and therefore, will not be further described in the present application. A bus interface provides an interface. The transceiver 702 may be a plurality of elements including a transmitter and a receiver, for providing a unit for communicating with various other apparatuses over a transmission medium. These transmission medium includes a transmission medium such as wireless channels, wired channels, optical cables, etc. The processor 703 is responsible for managing the bus interface and general processing, and the memory 701 can store data used by the processor 703 when performing operations.

Optionally, the processor 703 may be a central processing module (CPU), an application specific integrated circuit (ASIC), a field-programmable gate array (FPGA), or a complex programmable logic device (CPLD), and the processor may also use a multi-core architecture.

It should be noted that, the foregoing network device provided by the present application can implement all method steps implemented by the first network element or the second network element in the foregoing method embodiments, and can achieve the same technical effects. The parts and beneficial effects of this embodiment that are the same as those of the method embodiments are not described here again.

The present application also provides a processor-readable storage medium, where the processor-readable storage medium stores a computer program, and when the computer program is executed by a processor, the processor is enabled to perform the method implemented by the first network element or the second network element in the foregoing method embodiments.

The processor-readable storage medium may be any available medium or data storage device that can be accessed by the processor, including but not limited to a magnetic memory (such as a floppy disk, a hard disk, a magnetic tape, a magneto-optical disk (MO), etc.), an optical memory (such as a CD, a DVD, a BD, an HVD, etc.), and a semiconductor memory (such as a ROM, an EPROM, an EEPROM, a non-volatile memory (NAND FLASH), a solid state disk (SSD)), etc.

The present application also provides a computer program product, where the computer program product includes a computer program, and when the computer program is executed by a processor, the processor is enabled to perform the method implemented by the first network element or the second network element in the foregoing method embodiments.

A person skilled in the art shall understand that, the embodiments of the present application can be provided as a method, a system or a computer program product. Therefore, the present application may adopt the form of an entirely hardware embodiment, an entirely software embodiment or an embodiment combining software and hardware. Furthermore, the present application may adopt the form of a computer program product implemented on one or more computer-usable storage mediums (including but not limited to a disk memory, an optical memory, and the like) containing computer-usable program codes.

The present application is described with reference to the flowcharts and/or block diagrams of the methods, apparatuses and computer program products according to the embodiments of the present application. It should be understood that, each flow and/or block in the flowcharts and/or block diagrams and combinations of flows and/or blocks in the flowcharts and/or block diagrams can be implemented by computer-executable instructions. The computer-executable instructions may be provided to a processor of a general-purpose computer, a special-purpose computer, an embedded processor or other programmable data processing devices to produce a machine, which enables instructions executed by a processor of a computer or other programmable data processing devices to generate an apparatus for implementing functions specified in one or more processes in the flowcharts and/or one or more blocks in the block diagrams.

These processor-executable instructions may also be stored in a processor-readable memory that can direct a computer or other programmable data processing devices to operate in a particular manner, so that the instructions stored in the processor-readable memory generate an article of manufacture including an instruction apparatus. The instruction apparatus implements functions specified in one or more processes in the flowcharts and/or one or more blocks in the block diagrams.

These processor-executable instructions may also be loaded into a computer or other programmable data processing devices, so that a series of operational steps are performed on the computer or other programmable devices to generate computer-implemented processing. Thus, the instructions executed on the computer or other programmable devices provide steps for implementing the functions specified in one or more processes in the flowcharts and/or one or more blocks in the block diagrams.

Obviously, a person skilled in the art can make various modifications and variations to the present application without departing from the scope of the present application. As such, if these modifications and variations of the present application belong to the scope of the claims of the present application, the present application is intended to include these modifications and variations.

## Claims

1. A data processing method, performed by a first network element of a radio access network and comprising:
receiving (S201) a downlink data packet, wherein the downlink data packet comprises downlink user data and an identifier of a data flow to which the downlink user data belongs;
when the data flow is not mapped to a bearer, transmitting (S202) a first interface message to a second network element of the radio access network, wherein the first interface message comprises the identifier of the data flow, and the first interface message is used for determining a target bearer to which the data flow is mapped;
receiving a second interface message transmitted by the second network element, wherein the second interface message comprises an identifier of the target bearer;
determining configuration information of the target bearer according to the identifier of the target bearer comprised in the second interface message, wherein the configuration information of the target bearer comprises a mapping relationship between the target bearer and the data flow;
acquiring a downlink address of the target bearer from a third network element of the radio access network based on the mapping relationship;
transmitting the downlink user data to the third network element based on the downlink address of the target bearer, to enable the third network element to transmit the downlink user data to a user equipment through the target bearer.

2. The method according to claim 1, wherein the method further comprises:
judging whether the data flow is mapped to a bearer according to the identifier of the data flow.

3. The method according to claim 2, wherein when the data flow is mapped to the default bearer, the target bearer is a further bearer except the default bearer.

4. The method according to claim 1, wherein the method further comprises:
transmitting an uplink address of the target bearer to the third network element, wherein the uplink address is used for instructing the third network element to transmit uplink user data to the first network element through the uplink address.

5. The method according to claim 1, wherein the target bearer is an existing bearer in a protocol data unit session to which the data flow belongs;
wherein determining the configuration information of the target bearer according to the identifier of the target bearer comprised in the second interface message comprises:
updating configuration information of the existing bearer according to an identifier of the existing bearer comprised in the second interface message, wherein the updated configuration information of the existing bearer comprises a mapping relationship between the existing bearer and the data flow.

6. A data processing method, performed by a second network element of a radio access network and comprising:
receiving a first interface message (S202) transmitted by a first network element of the radio access network, wherein the first interface message comprises an identifier of a data flow of downlink user data, and the first interface message is transmitted by the first network element when the data flow is not mapped to a bearer;
determining (S203) a target bearer to which the data flow is mapped according to the first interface message;
transmitting (S204) a second interface message to the first network element, wherein the second interface message comprises an identifier of the target bearer;
transmitting a third interface message to a third network element of the radio access network, wherein the third interface message is used for instructing the third network element and a user equipment to determine configuration information of the target bearer and for instructing the third network element to allocate a downlink address of the target bearer;
receiving the downlink address transmitted by the third network element and transmitting the downlink address to the first network element, to enable the first network element to transmit the downlink user data to the third network element according to the downlink address.

7. The method according to claim 6, wherein the method further comprises:
receiving an uplink address of the target bearer transmitted by the first network element;
transmitting the uplink address to the third network element, to enable the third network element to transmit uplink user data to the first network element through the uplink address.

8. A data processing apparatus (500) of a first network element of a radio access network and comprising:
a receiving module (501), configured to receive a downlink data packet, wherein the downlink data packet comprises downlink user data and an identifier of a data flow to which the downlink user data belongs;
a transmitting module (502), configured to transmit a first interface message to a second network element of the radio access network when the data flow is not mapped to a bearer, wherein the first interface message comprises the identifier of the data flow, and the first interface message is used for determining a target bearer to which the data flow is mapped;
wherein the receiving module (501) is further configured to receive a second interface message transmitted by the second network element, wherein the second interface message comprises an identifier of the target bearer; and
the transmitting module (502) is further configured to determine configuration information of the target bearer according to the identifier of the target bearer comprised in the second interface message, wherein the configuration information of the target bearer comprises a mapping relationship between the target bearer and the data flow;
acquire a downlink address of the target bearer from a third network element of the radio access network based on the mapping relationship; and
transmit the downlink user data to the third network element based on the downlink address of the target bearer, to enable the third network element to transmit the downlink user data to a user equipment through the target bearer.

9. A data processing apparatus (600) of a second network element of a radio access network and comprising:
a receiving module (601), configured to receive a first interface message transmitted by a first network element of the radio access network, wherein the first interface message comprises an identifier of a data flow of downlink user data, and the first interface message is transmitted by the first network element when the data flow is not mapped to a bearer;
a processing module (602), configured to determine a target bearer to which the data flow is mapped according to the first interface message;
a transmitting module (603), configured to transmit a second interface message to the first network element, wherein the second interface message comprises an identifier of the target bearer;
transmit a third interface message to a third network element of the radio access network, wherein the third interface message is used for instructing the third network element and a user equipment to determine configuration information of the target bearer and for instructing the third network element to allocate a downlink address of the target bearer;
wherein the receiving module (601) is further configured to receive the downlink address transmitted by the third network element and transmit the downlink address to the first network element, to enable the first network element to transmit the downlink user data to the third network element according to the downlink address.

10. A processor-readable storage medium, wherein the processor-readable storage medium stores a computer program, and the computer program is used for enabling the processor to perform the method according to any one of claims 1 to 5 or the method according to any one of claims 6 to 7.

11. A computer program product comprising a computer program, and when the computer program is executed by a processor, the processor is enabled to perform the method according to any one of claims 1 to 5 or the method according to any one of claims 6 to 7.

## Patentansprüche

1. Datenverarbeitungsverfahren, das durch ein erstes Netzelement eines Funkzugangsnetzes durchgeführt wird und Folgendes umfasst:
Empfangen (S201) eines Downlink-Datenpakets, wobei das Downlink-Datenpaket Downlink-Nutzerdaten und eine Kennung eines Datenflusses, zu dem die Downlink-Nutzerdaten gehören, umfasst;
wenn der Datenfluss keinem Träger zugeordnet ist, Übertragen (S202) einer ersten Schnittstellennachricht an ein zweites Netzelement des Funkzugangsnetzes, wobei die erste Schnittstellennachricht die Kennung des Datenflusses umfasst und die erste Schnittstellennachricht zum Bestimmen eines Zielträgers, dem der Datenfluss zugeordnet wird, verwendet wird;
Empfangen einer durch das zweite Netzelement übertragenen zweiten Schnittstellennachricht, wobei die zweite Schnittstellennachricht eine Kennung des Zielträgers umfasst;
Bestimmen von Konfigurationsinformationen des Zielträgers gemäß der Kennung des Zielträgers, die in der zweiten Schnittstellennachricht enthalten ist, wobei die Konfigurationsinformationen des Zielträgers eine Zuordnungsbeziehung zwischen dem Zielträger und dem Datenfluss umfassen;
Erfassen einer Downlink-Adresse des Zielträgers anhand eines dritten Netzelements des Funkzugangsnetzes basierend auf der Zuordnungsbeziehung;
Übertragen der Downlink-Nutzerdaten an das dritte Netzelement basierend auf der Downlink-Adresse des Zielträgers, um dem dritten Netzelement zu ermöglichen, die Downlink-Nutzerdaten über den Zielträger an ein Nutzergerät zu übermitteln.

2. Verfahren nach Anspruch 1, wobei das Verfahren ferner Folgendes umfasst:
Beurteilen, ob der Datenfluss gemäß der Kennung des Datenflusses einem Träger zugeordnet ist.

3. Verfahren nach Anspruch 2, wobei der Zielträger ein weiterer Träger außer dem Standardträger ist, wenn der Datenfluss dem Standardträger zugeordnet wird.

4. Verfahren nach Anspruch 1, wobei das Verfahren ferner Folgendes umfasst:
Übertragen einer Uplink-Adresse des Zielträgers an das dritte Netzelement, wobei die Uplink-Adresse verwendet wird, um das dritte Netzelement anzuweisen, Uplink-Nutzerdaten über die Uplink-Adresse an das erste Netzelement zu übertragen.

5. Verfahren nach Anspruch 1, wobei der Zielträger ein bestehender Träger in einer Protkolldateneinheitssitzung ist, zu der der Datenfluss gehört,
wobei das Bestimmen der Konfigurationsinformationen des Zielträgers gemäß der in der zweiten Schnittstellennachricht enthaltenen Kennung des Zielträgers Folgendes umfasst:
Aktualisieren von Konfigurationsinformationen des bestehenden Zielträgers gemäß einer Kennung des bestehenden Zielträgers, die in der zweiten Schnittstellennachricht enthalten ist, wobei die aktualisierten Konfigurationsinformationen des bestehenden Zielträgers eine Zuordnungsbeziehung zwischen dem bestehenden Zielträger und dem Datenfluss umfassen.

6. Datenverarbeitungsverfahren, das durch ein zweites Netzelement eines Funkzugangsnetzes durchgeführt wird und Folgendes umfasst:
Empfangen einer durch ein erstes Netzelement des Funkzugangsnetzes übermittelten ersten Schnittstellennachricht (S202), wobei die erste Schnittstellennachricht eine Kennung eines Datenflusses von Downlink-Nutzerdaten umfasst und die erste Schnittstellennachricht durch das erste Netzelement übertragen wird, wenn der Datenfluss keinem Träger zugeordnet ist;
Bestimmen (S203) eines Zielträgers, dem der Datenfluss gemäß der ersten Schnittstellennachricht zugeordnet wird;
Übertragen (S204) einer zweiten Schnittstellennachricht an das erste Netzelement, wobei die zweite Schnittstellennachricht eine Kennung des Zielträgers umfasst;
Übertragen einer dritten Schnittstellennachricht an ein drittes Netzelement des Funkzugangsnetzes,
wobei die dritte Schnittstellennachricht verwendet wird, um das dritte Netzelement und ein Benutzergerät anzuweisen, Konfigurationsinformationen des Zielträgers zu bestimmen, und das dritte Netzelement anzuweisen, eine Downlink-Adresse des Zielträgers zuzuweisen;
Empfangen der durch das dritte Netzelement übertragenen Downlink-Adresse und Übertragen der Downlink-Adresse an das erste Netzelement, um dem ersten Netzelement zu ermöglichen, die Downlink-Nutzerdaten gemäß der Downlink-Adresse an das dritte Netzelement zu übertragen.

7. Verfahren nach Anspruch 6, wobei das Verfahren ferner Folgendes umfasst:
Empfangen einer durch das erste Netzelement übertragenen Uplink-Adresse des Zielträgers;
Übertragen der Uplink-Adresse an das dritte Netzelement, um dem dritten Netzelement zu ermöglichen, Uplink-Nutzerdaten über die Uplink-Adresse an das erste Netzelement zu übertragen.

8. Datenverarbeitungsvorrichtung (500) eines ersten Netzelements eines Funkzugangsnetzes, umfassend:
ein Empfangsmodul (501), das zum Empfangen eines Downlink-Datenpakets ausgelegt ist, wobei das Downlink-Datenpaket Downlink-Nutzerdaten und eine Kennung eines Datenflusses, zu dem die Downlink-Nutzerdaten gehören, umfasst;
ein Übertragungsmodul (502), das zum Übertragen einer ersten Schnittstellennachricht an ein zweites Netzelement des Funkzugangsnetzes ausgelegt ist, wenn der Datenfluss keinem Träger zugeordnet ist, wobei die erste Schnittstellennachricht die Kennung des Datenflusses umfasst und die erste Schnittstellennachricht zum Bestimmen eines Zielträgers, dem der Datenfluss zugeordnet wird, verwendet wird,
wobei das Empfangsmodul (501) ferner zum Empfangen einer durch das zweite Netzelement übertragenen zweiten Schnittstellennachricht ausgelegt ist, wobei die zweite Schnittstellennachricht eine Kennung des Zielträgers umfasst, und
das Übertragungsmodul (502) ferner zu Folgendem ausgelegt ist: Bestimmen von Konfigurationsinformationen des Zielträgers gemäß der Kennung des Zielträgers, die in der zweiten Schnittstellennachricht enthalten ist, wobei die Konfigurationsinformationen des Zielträgers eine Zuordnungsbeziehung zwischen dem Zielträger und dem Datenfluss umfassen;
Erfassen einer Downlink-Adresse des Zielträgers anhand eines dritten Netzelements des Funkzugangsnetzes basierend auf der Zuordnungsbeziehung und
Übertragen der Downlink-Nutzerdaten an das dritte Netzelement basierend auf der Downlink-Adresse des Zielträgers, um dem dritten Netzelement zu ermöglichen, die Downlink-Nutzerdaten über den Zielträger an ein Nutzergerät zu übermitteln.

9. Datenverarbeitungsvorrichtung (600) eines zweiten Netzelements eines Funkzugangsnetzes, umfassend:
ein Empfangsmodul (601), das zum Empfangen einer durch ein erstes Netzelement des Funkzugangsnetzes übermittelten ersten Schnittstellennachricht ausgelegt ist, wobei die erste Schnittstellennachricht eine Kennung eines Datenflusses von Downlink-Nutzerdaten umfasst und die erste Schnittstellennachricht durch das erste Netzelement übertragen wird, wenn der Datenfluss keinem Träger zugeordnet ist;
ein Verarbeitungsmodul (602), das zum Bestimmen eines Zielträgers, dem der Datenfluss gemäß der ersten Schnittstellennachricht zugeordnet ist, ausgelegt ist;
ein Übertragungsmodul (603), das zu Folgendem ausgelegt ist: Übertragen einer zweiten Schnittstellennachricht an das erste Netzelement, wobei die zweite Schnittstellennachricht eine Kennung des Zielträgers umfasst;
Übertragen einer dritten Schnittstellennachricht an ein drittes Netzelement des Funkzugangsnetzes,
wobei die dritte Schnittstellennachricht verwendet wird, um das dritte Netzelement und ein Benutzergerät anzuweisen, Konfigurationsinformationen des Zielträgers zu bestimmen, und das dritte Netzelement anzuweisen, eine Downlink-Adresse des Zielträgers zuzuweisen;
wobei das Empfangsmodul (601) ferner zum Empfangen der durch das dritte Netzelement übertragenen Downlink-Adresse und Übertragen der Downlink-Adresse an das erste Netzelement ausgelegt ist, um dem ersten Netzelement zu ermöglichen, die Downlink-Nutzerdaten gemäß der Downlink-Adresse an das dritte Netzelement zu übertragen.

10. Prozessorlesbares Speichermedium, wobei auf dem prozessorlesbaren Speichermedium ein Computerprogramm gespeichert ist und das Computerprogramm verwendet wird, um dem Prozessor zu ermöglichen, das Verfahren nach einem der Ansprüche 1 bis 5 oder das Verfahren nach einem der Ansprüche 6 bis 7 durchzuführen.

11. Computerprogrammprodukt, umfassend ein Computerprogramm, wobei, wenn das Computerprogramm durch einen Prozessor ausgeführt wird, dem Prozessor ermöglicht wird, das Verfahren nach einem der Ansprüche 1 bis 5 oder das Verfahren nach einem der Ansprüche 6 bis 7 durchzuführen.

## Revendications

1. Procédé de traitement de données, mis en œuvre par un premier élément de réseau d'un réseau d'accès radio et comprenant :
la réception (S201) d'un paquet de données en liaison descendante, le paquet de données en liaison descendante comprenant des données utilisateur en liaison descendante et un identifiant d'un flux de données auquel appartiennent les données utilisateur en liaison descendante ;
lorsque le flux de données n'est pas mappé sur un support de transmission, la transmission (S202) d'un premier message d'interface à un deuxième élément de réseau du réseau d'accès radio, le premier message d'interface comprenant l'identifiant du flux de données, et le premier message d'interface étant utilisé pour déterminer un support de transmission cible sur lequel le flux de données est mappé ;
la réception d'un deuxième message d'interface transmis par le deuxième élément de réseau, le deuxième message d'interface comprenant un identifiant du support de transmission cible ;
la détermination des informations de configuration du support de transmission cible en fonction de l'identifiant du support de transmission cible compris dans le deuxième message d'interface, les informations de configuration du support de transmission cible comprenant une relation de mappage entre le support de transmission cible et le flux de données ;
l'acquisition d'une adresse de liaison descendante du support de transmission cible à partir d'un troisième élément de réseau du réseau d'accès radio sur la base de la relation de mappage ;
la transmission des données utilisateur en liaison descendante au troisième élément de réseau sur la base de l'adresse en liaison descendante du support cible, afin de permettre au troisième élément de réseau de transmettre les données utilisateur en liaison descendante à un équipement utilisateur par l'intermédiaire du support de transmission cible.

2. Procédé selon la revendication 1, le procédé comprenant en outre :
la détermination si le flux de données est mappé à un support de transmission en fonction de l'identifiant du flux de données.

3. Procédé selon la revendication 2, dans lequel, lorsque le flux de données est mappé au support de transmission par défaut, le support de transmission cible est un autre support de transmission que le support de transmission par défaut.

4. Procédé selon la revendication 1, le procédé comprenant en outre :
la transmission d'une adresse de liaison montante du support de transmission cible au troisième élément de réseau, l'adresse de liaison montante étant utilisée pour ordonner au troisième élément de réseau de transmettre les données utilisateur de liaison montante au premier élément de réseau par l'intermédiaire de l'adresse de liaison montante.

5. Procédé selon la revendication 1, dans lequel le support de transmission cible est un support de transmission existant dans une session d'unité de données de protocole à laquelle appartient le flux de données ;
la détermination des informations de configuration du support de transmission cible en fonction de l'identifiant du support de transmission cible compris dans le deuxième message d'interface comprenant :
la mise à jour des informations de configuration du support de transmission existant en fonction d'un identifiant du support de transmission existant compris dans le deuxième message d'interface, les informations de configuration mises à jour du support de transmission existant comprenant une relation de mappage entre le support de transmission existant et le flux de données.

6. Procédé de traitement de données, mis en œuvre par un deuxième élément de réseau d'un réseau d'accès radio et comprenant :
la réception d'un premier message d'interface (S202) transmis par un premier élément de réseau du réseau d'accès radio, le premier message d'interface comprenant un identifiant d'un flux de données utilisateur en liaison descendante, et le premier message d'interface est transmis par le premier élément de réseau lorsque le flux de données n'est pas mappé à un support de transmission ;
la détermination (S203) d'un support de transmission cible auquel le flux de données est mappé conformément au premier message d'interface ;
la transmission (S204) d'un deuxième message d'interface au premier élément de réseau, le deuxième message d'interface comprenant un identifiant du support de transmission cible ;
la transmission d'un troisième message d'interface à un troisième élément de réseau du réseau d'accès radio,
le troisième message d'interface étant utilisé pour ordonner au troisième élément de réseau et à un équipement utilisateur de déterminer des informations de configuration du support de transmission cible, et pour ordonner au troisième élément de réseau d'attribuer une adresse de liaison descendante au support de transmission cible ;
la réception de l'adresse de liaison descendante transmise par le troisième élément de réseau et la transmission de l'adresse de liaison descendante au premier élément de réseau, afin de permettre au premier élément de réseau de transmettre les données utilisateur en liaison descendante au troisième élément de réseau conformément à l'adresse de liaison descendante.

7. Procédé selon la revendication 6, le procédé comprenant en outre :
la réception d'une adresse de liaison montante du support de transmission cible transmise par le premier élément de réseau ;
la transmission de l'adresse de liaison montante au troisième élément de réseau, afin de permettre au troisième élément de réseau de transmettre des données utilisateur en liaison montante au premier élément de réseau par l'intermédiaire de l'adresse de liaison montante.

8. Appareil de traitement de données (500) d'un premier élément de réseau d'un réseau d'accès radio, comprenant :
un module de réception (501), configuré pour recevoir un paquet de données en liaison descendante, le paquet de données en liaison descendante comprenant des données utilisateur en liaison descendante et un identifiant d'un flux de données auquel appartiennent les données utilisateur en liaison descendante ;
un module de transmission (502), configuré pour transmettre un premier message d'interface à un deuxième élément de réseau du réseau d'accès radio lorsque le flux de données n'est pas mappé sur un support de transmission, le premier message d'interface comprenant l'identifiant du flux de données, et le premier message d'interface étant utilisé pour déterminer un support de transmission cible sur lequel le flux de données est mappé ;
le module de réception (501) étant en outre configuré pour recevoir un deuxième message d'interface transmis par le deuxième élément de réseau, le deuxième message d'interface comprenant un identifiant du support de transmission cible ; et
le module de transmission (502) est en outre configuré pour déterminer des informations de configuration du support de transmission cible en fonction de l'identifiant du support de transmission cible compris dans le deuxième message d'interface, les informations de configuration du support de transmission cible comprenant une relation de mappage entre le support de transmission cible et le flux de données ;
l'acquisition d'une adresse de liaison descendante du support de transmission cible à partir d'un troisième élément de réseau du réseau d'accès radio sur la base de la relation de mappage ; et
la transmission des données utilisateur en liaison descendante au troisième élément de réseau sur la base de l'adresse de liaison descendante du support de transmission cible, afin de permettre au troisième élément de réseau de transmettre les données utilisateur en liaison descendante à un équipement utilisateur par l'intermédiaire du support de transmission cible.

9. Dispositif de traitement de données (600) d'un deuxième élément de réseau d'un réseau d'accès radio, comprenant :
un module de réception (601), configuré pour recevoir un premier message d'interface transmis par un premier élément de réseau du réseau d'accès radio, le premier message d'interface comprenant un identifiant d'un flux de données utilisateur en liaison descendante, et le premier message d'interface est transmis par le premier élément de réseau lorsque le flux de données n'est pas mappé à un support de transmission ;
un module de traitement (602), configuré pour déterminer un support de transmission cible auquel le flux de données est mappé conformément au premier message d'interface ;
un module de transmission (603), configuré pour transmettre un deuxième message d'interface au premier élément de réseau, le deuxième message d'interface comprenant un identifiant du support de transmission cible ;
la transmission d'un troisième message d'interface à un troisième élément de réseau du réseau d'accès radio,
le troisième message d'interface étant utilisé pour ordonner au troisième élément de réseau et à un équipement utilisateur de déterminer des informations de configuration du support de transmission cible, et pour ordonner au troisième élément de réseau d'attribuer une adresse de liaison descendante au support de transmission cible ;
le module de réception (601) étant en outre configuré pour recevoir l'adresse de liaison descendante transmise par le troisième élément de réseau et pour transmettre l'adresse de liaison descendante au premier élément de réseau, afin de permettre au premier élément de réseau de transmettre les données utilisateur en liaison descendante au troisième élément de réseau conformément à l'adresse de liaison descendante.

10. Support de stockage lisible par un processeur, dans lequel le support de stockage lisible par un processeur stocke un programme informatique, et le programme informatique est utilisé pour permettre au processeur d'exécuter le procédé selon l'une quelconque des revendications 1 à 5 ou le procédé selon l'une quelconque des revendications 6 à 7.

11. Produit de programme informatique comprenant un programme informatique, et lorsque le programme informatique est exécuté par un processeur, le processeur est alors en mesure de mettre en œuvre le procédé selon l'une quelconque des revendications 1 à 5 ou le procédé selon l'une quelconque des revendications 6 à 7.
